# EUROPÄISCHE PATENTSCHRIFT

(11) **EP 2 112 387 B1**
(45) Veröffentlichungstag und Bekanntmachung des Hinweises auf die Patenterteilung: **02.06.2010**
(21) Anmeldenummer: 08007875.1
(22) Anmeldetag: 23.04.2008
(51) Int. Cl.: F16D 3/84, F16J 15/04

(54) **Längsgeteiltes Wellrohr und Kupplungsschutzeinrichtung mit Wellrohr**
Longitudinally split corrugated pipe and coupling protection device with corrugated pipe
Tube ondulé séparé en longueur et dispositif de protection d'embrayage doté d'un tube ondulé

(43) Veröffentlichungstag der Anmeldung: 28.10.2009
(73) Patentinhaber: SIEMENS AKTIENGESELLSCHAFT, 80333 München (DE)
(72) Erfinder: Cizek, Petr, 67904 Adamov (CZ)

(56) Entgegenhaltungen:
- WO-A-89/12190
- DE-A1- 4 323 524
- DE-B- 1 266 590

## Beschreibung

Die Erfindung betrifft ein längsgeteiltes Wellrohr und eine Kupplungsschutzeinrichtung für eine Turbomaschine mit dem Wellrohr.

Eine Turbomaschine, beispielsweise ein Turboverdichter oder eine Dampfturbine, weist einen Rotor auf, der zum Betrieb der Turbomaschine drehangetrieben ist. Der Antrieb des Rotors wird herkömmlich mit einem von der Turbomaschine externen Antrieb bewerkstelligt, wie beispielsweise von einer Dampfturbine, einer Gasturbine, einem Verbrennungsmotor oder einem Elektromotor. Der Rotor weist eine Antriebswelle mit einem Wellenende auf, an dem er von dem externen Antrieb antreibbar ist, und der externe Antrieb weist eine Abtriebswelle mit einem Wellenende auf, mit dem die Antriebsleistung von dem externen Antrieb auf die Turbomaschine übertragbar ist. Das Wellenende der Abtriebswelle und das Wellenede der Antriebswelle sind mittels einer Kupplung drehstarr gekuppelt. Die Kupplung ist beispielsweise als eine Rohrkupplung, eine Membrankupplung oder eine ölgeschmierte Zahnkupplung ausgeführt.

Beim Betrieb der Turbomaschine dreht die Kupplung mit derselben Drehzahl wie der Rotor. Herkömmlich ist die Kupplung mit einer Kupplungsschutzeinrichtung versehen, die als eine starre Hülle die Kupplung umgibt und damit die Kupplung von außen unzugänglich macht, so dass beim Betrieb der Turbomaschine beispielsweise ein Mensch die Kupplung nicht berühren und dabei sich nicht verletzen kann. Herkömmlich ist die Kupplungsschutzeinrichtung als zwei halbzylinderförmige Blechschalen ausgeführt, die im Montierzustand als ein Zylinder um die Kupplung angeordnet sind.

Die Turbomaschine und der Antrieb sind herkömmlich sich verändernden Umgebungs- und Betriebstemperaturen ausgesetzt, so dass das Antriebswellenende und das Abtriebswellenende aufgrund von thermischer Ausdehnung relativ zueinander sich bewegen. Eine derartige Bewegung kann im Bereich von 10 mm liegen. Um dieser Relativbewegung gerecht zu werden, ist die Kupplungsschutzeinrichtung herkömmlich entweder an der Turbomaschine oder an dem Antrieb, beispielsweise an dem Gehäuse der Turbomaschine oder an dem Gehäuse des Antriebs, mit lediglich einem Ende fest befestigt. An dem anderen diesem Ende abgewandten Ende ist die Kupplungsschutzeinrichtung in seine Längsrichtung verschiebbar gelagert, um der Relativbewegung folgen zu können.

Die Kupplungsschutzeinrichtung ist beispielsweise mit dem Gehäuse der Turbomaschine verschraubt. Ferner weist beispielsweise das Gehäuse des Antriebs einen Vorsprung mit einer zylindrischen Außenkontur auf, deren Symmetrieachse mit der Drehachse des Rotors zusammenfällt. Um die zylindrische Außenkontur ist eine zylindrische Fläche der Kupplungsschutzeinrichtung konzentrisch angeordnet, so dass die Relativbewegung zwischen dem Gehäuse der Turbomaschine und dem Vorsprung des Antriebs ermöglicht ist.

Ist die Kupplung beispielsweise die Zahnkupplung, so entsteht beim Betrieb im Inneren der Kupplungsschutzeinrichtung ein Öldampf aufgrund der Ölschmierung in der Zahnkupplung. Um die bei der Ölschmierung entstehende Öldampfemission aus der Kupplungsschutzeinrichtung gering zu halten, ist diese möglichst emissionsdicht auszuführen. So sind an der zylindrischen Fläche der Kupplungsschutzeinrichtung zwei O-Ringe versehen, die das Innere der Kupplungsschutzeinrichtung nach außen abdichten.

Die beiden halbzylinderförmigen Blechschalen der Kupplungsschutzeinrichtung liegen an einer Teilfuge aneinander. Die Teilfuge ist möglichst dicht ausgeführt, so dass der im Inneren der Kupplungsschutzeinrichtung sich befindliche Öldampf nach außen durch die Teilfuge nicht gelangen kann.

Alternativ kann die Kupplungsschutzeinrichtung als ein Wellrohr ausgebildet sein. Das Wellrohr weist einen Wellrohrkörper auf, der mindestens einen zylindrischen Abschnitt und einem wellenförmigen Abschnitt aufweist. Der wellenförmige Abschnitt weist hintereinander angeordnete umlaufende Aus- und Einbuchtungen auf. Die Aus- und Einbuchtungen sind derart gestaltet, dass der Wellrohrkörper in seiner Längsrichtung flexibel und elastisch nachgeben kann. Das Wellrohr ist sowohl an der Turbomaschine als auch an dem Antrieb fest befestigt, wobei von den Aus- und Einbuchtungen axiale Bewegungen relativ zwischen der Turbomaschine und dem Antrieb ausgeglichen werden können. Das Wellrohr ist ungeteilt ausgeführt, wodurch dessen Montage um die Kupplung aufwendig ist.

Aufgabe der Erfindung ist es ein längsgeteiltes Wellrohr und einen Kupplungsschutzeinrichtung mit dem längsgeteilten Wellrohr zu schaffen, wobei der Kupplungsschutzeinrichtung einfach montierbar und dicht ist.
DE 4323524, WO 89/12190 und DE 1266590 offenbaren den relevante Stand der Technik.

Das erfindungsgemäße Wellrohr ist längsgeteilt und weist einen Wellrohrkörper und eine Haltevorrichtung auf. Der Wellrohrkörper weist eine in Längsrichtung des Wellrohrs verlaufende Teilfuge und mindestens eine quer zur Teilfuge umlaufende Aus- und/oder Einbuchtung auf. Die Haltevorrichtung hält den Wellrohrkörper entlang der Teilfuge zusammen und ist an der Aus- und/oder Einbuchtung in Längsrichtung des Wellrohrs flexibel ausgebildet.

Die erfindungsgemäße Kupplungsschutzeinrichtung für eine Turbomaschine weist das längsgeteilte Wellrohr auf.

Das Wellrohr weist die in Längsrichtung des Wellrohrs verlaufende Teilfuge auf und ist somit längsgeteilt. Ist die Haltevorrichtung an dem Wellrohrkörper nicht montiert, so ist der Wellrohrkörper an der Teilfuge teilbar, wodurch der Wellrohrkörper einfach um ein Bauteil, beispielsweise eine Kupplung, montiert werden kann. Die Haltevorrichtung hält den Wellrohrkörper entlang der Teilfuge zusammen, so dass mit der Haltevorrichtung der Wellrohrkörper fest und sicher um das Bauteil anbringbar und an der Teilfuge abgedichtet ist.

Die Haltevorrichtung ist an der Aus- und/oder Einbuchtung in Längsrichtung des Wellrohrs flexibel ausgebildet, so dass die Haltevorrichtung dieselbe axiale Bewegung durchführen kann, wie sie von dem Wellrohrkörper ausführbar ist. Dadurch wird vorteilhaft erreicht, dass das Wellrohr mit seinem Wellrohrkörper und seiner Haltevorrichtung in Längsrichtung des Wellrohrs flexible ist, wobei das Wellrohr an der Teilfuge längsgeteilt ausgeführt ist.

Weist die erfindungsgemäße Kupplungsschutzeinrichtung für eine Turbomaschine das Wellrohr auf, kann die Kupplungsschutzeinrichtung einfach an die Kupplung der Turbomaschine montiert werden. Zuerst ist von der Kupplungsschutzeinrichtung die Haltevorrichtung zu entfernen, so dass an der Teilfuge der Wellrohrkörper geöffnet werden kann. Ferner ist der Wellrohrkörper an der geteilten Teilfuge über die Kupplung zu ziehen. Anschließend ist der Wellrohrkörper an der Trennfuge wieder zusammenzubringen und die Haltevorrichtung ist an der Teilfuge derart anzubringen, dass die Haltevorrichtung entlang der Teilfuge den Wellrohrkörper zusammenhält.

Bevorzugt weist die Haltevorrichtung ein erstes Halteband und ein zweites Halteband auf, die jeweils entlang der Teilfuge tangential zum Wellrohrkörper verlaufen und fest miteinander befestigt sind, wobei das erste Halteband an der einen Seite der Teilfuge mit dem Wellrohrkörper in Eingriff steht und das zweite Halteband an der anderen Seite der Teilfuge mit dem Wellrohrkörper in Eingriff steht, so dass von den Haltebändern die Teilfuge zusammengehalten ist.

Die beiden Haltebänder verlaufen unmittelbar an der Teilfuge und sind tangential zum Wellrohrkörper angeordnet, so dass die Haltebänder der Oberflächenkontur des Wellrohrkörpers folgen. Somit sind die Haltebänder im Bereich der Aus- und/oder Einbuchtung wie der Wellrohrkörper wellig ausgebildet. Dadurch ist das Halteband an der Aus- und/oder.Einbuchtung in ähnlicher Weise wie der Wellrohrkörper in Längsrichtung desselben flexibel ausgebildet, wodurch die Haltevorrichtung an dem Wellrohrkörper vorteilhaft nicht versteifend wirkt. Somit ist das Wellrohr in seiner Längsrichtung flexibel, obwohl das Wellrohr die Teilfuge aufweist.

Außerdem ist es bevorzugt, dass an der Teilfuge der Wellrohrkörper an der einen Seite der Teilfuge einen ersten Teilfugenflansch sowie an der anderen Seite der Teilfuge einen zweiten Teilfugenflansch aufweist, und dass an dem ersten Halteband an dessen der Teilfuge zugewandten Längsseite eine erste Haltekante, die an dem Teilfugenflansch angreift, sowie an dem zweiten Halteband an dessen der Teilfuge zugewandten Längsseite eine zweite Haltekante ausgebildet ist, die an dem zweiten Teilfugenflansch angreift, so dass von den Haltebändern mit deren Haltekanten die Teilfuge zusammengehalten ist.

Die Haltebänder haben in Richtung zur Teilfuge eine hohe Steifigkeit auf, so dass die Haltebänder an ihren Haltekanten eine große Kraft auf die Teilfuge übertragen können. Dadurch ist von den Haltebändern die Teilfuge fest und stabil zusammengehalten.

Bevorzugt ist es, dass an den Teilfugenflanschen jeweils ein Teilfugensteg ausgebildet ist, der an dem Wellrohrkörper außen liegend und sich von der Teilfuge wegerstreckend angeordnet ist, so dass das erste Halteband an dem ersten Teilfugenflansch und das zweite Halteband an dem zweiten Teilfugen-flansch verriegelt ist.

Dadurch sind vorteilhaft die Haltebänder mittels der Teilfugenstege an den Teilfugenflanschen geführt, so dass die Haltevorrichtung stabil und sicher an dem Wellrohrkörper montiert ist.

Es ist bevorzugt, dass die Haltevorrichtung eine Klammer und/oder eine Spannschraubeneinrichtung aufweist, mit der das erste Halteband und das zweite Halteband miteinander befestigt sind.

Dadurch sind die beiden Haltebänder stabil und zuverlässig miteinander verbunden. Ferner ermöglicht vorteilhaft die Spannschraubeneinrichtung ein flexibel einstellbares gegenseitiges Verspannen der beiden Haltebänder und somit eine dosierte Kraftaufbringung auf die Teilfugenflansche.

Bevorzugt ist es, dass das Wellrohr als ein Membranbalg oder ein Wellbalg ausgeführt ist.

Der Wellrohrkörper kann aus Edelstahl gefertigt sein. Der aus Edelstahl gefertigte Wellrohrkörper hat eine funkenunterdrückende Wirkung, insbesondere beim Anstreifen mit dazu relativ bewegten Metallteilen, wie beispielsweise der Kupplung, so dass der Wellrohrkörper vorteilhaft in einer Kupplungsschutzeinrichtung verwendet werden kann, die beispielsweise in einer Ex-Zone einer chemischen Anlage installiert ist.

Bevorzugt ist, dass das Wellrohr aus Verbundwerkstoff, insbesondere faserverstärkt, gefertigt ist.

Die dem Verbundwerkstoff innewohnenden Festigkeitseigenschaften verleihen dem Wellrohr in Längsrichtung eine hohe Zugfestigkeit und quer zur Längsrichtung eine Biegeschlaffheit, wodurch das Wellrohr stabil und an der Aus- und/oder Einbuchtung hoch flexibel ausgebildet ist. Ferner ist das aus dem Verbundwerkstoff hergestellte Wellrohr einfach und kostengünstig zu fertigen.

Aufgrund der Biegeschlaffheit des Wellrohrs neigt dieses prinzipiell an der Teilfuge Verwerfungen auszubilden, die zu Undichtigkeiten der Teilfuge führen können. Erfindungsgemäß ist der Wellrohrkörper entlang der Teilfuge von der Haltevorrichtung zusammengehalten, so dass die Teilfuge mittels der Haltevorrichtung abgedichtet ist.

Ferner sind die Haltebänder bevorzugt als Stahlblech gefertigt, so dass vorteilhaft die Haltebänder eine hohe Querelastizität bei einer hohen Festigkeit haben. Die Haltebänder sind insbesondere geeignet die Teilfuge des aus Verbundwerkstoff hergestellten Wellrohrs stabil zusammenzudrücken und abzudichten.

Im folgenden wird ein bevorzugtes Ausführungsbeispiel einer erfindungsgemäßen Kupplungsschutzeinrichtung anhand der beigefügten schematischen Zeichnungen erläutert. Es zeigt:
- Fig. 1: eine perspektivische Ausschnittsansicht des Ausführungsbeispiels und
- Fig. 2: Schnitt I - I aus Fig. 1.

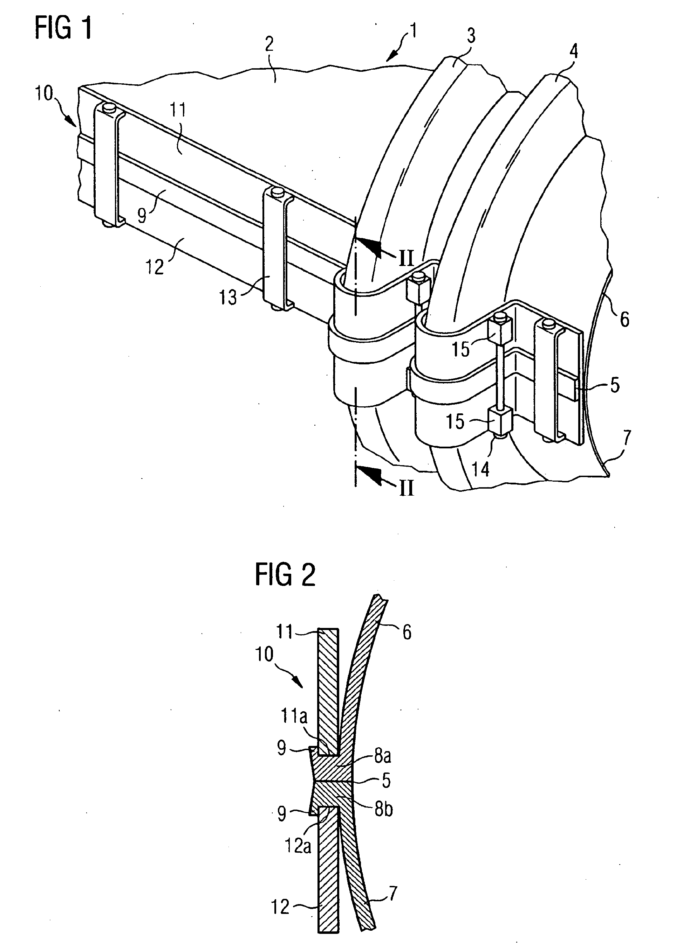

Wie es aus Fig. 1 und 2 ersichtlich ist, weist eine Kupplungsschutzeinrichtung 1 einen Wellrohrkörper 2 auf. In dem Wellrohrkörper 2 ist eine erste Ausbuchtung 3 und eine zweite Ausbuchtung 4 ausgebildet, die die Längsachse des Wellrohrkörpers nebeneinander liegend umlaufen. Die erste Ausbuchtung 3 und die zweite Ausbuchtung 4 weisen jeweils einen größeren Außendurchmesser als der des Wellrohrkörpers 2 auf. Ferner haben die erste Ausbuchtung 3 und die zweite Ausbuchtung 4 jeweils eine Erstreckung in Längsrichtung des Wellrohrkörpers 2, die in etwa dem Radiusunterschied zwischen der Außenoberfläche des Wellrohrkörpers 2 und der ersten bzw. der zweiten Ausbuchtung 3 bzw. 4 entspricht.

Der Wellrohrkörper 2 weist eine parallel zu seiner Längsrichtung verlaufende Teilfuge 5 auf, so dass der Wellrohrkörper 2 in Radialrichtung geteilt ist. Die Teilfuge 5 teilt den Wellrohrkörper 2 in ein oberes Wellrohrkörperteil 6 und ein unteres Wellrohrkörperteil 7, die an der Teilfuge 5 in Kontakt stehen.

Der obere Wellrohrkörperteil 6 ist mit einem oberen Teilfugenflansch 8a und der untere Wellrohrkörperteil 7 ist mit einem unteren Teilfugenflansch 8b versehen. Die Teilfugenflansche 8a und 8b erstrecken sich an der Teilfuge 5 von dem jeweiligen Wellrohrkörperteil 6 bzw. 7 radial weg von dem Wellrohrkörper 2. Jeweils der Außenrand des oberen Teilfugenflansches 8a und des unteren Teilfugenflansches 8b ist mit einem Teilfugensteg 9 versehen. In Fig. 2 gesehen erstreckt sich der obere Teilfugenflansch 8a horizontal, wobei an seinem Außenende der Teilfugensteg 9 nach oben sich erstreckt, so dass an dem oberen Teilfugenflansch 8a eine Längsnut ausgebildet ist. Analog erstreckt sich in Fig. 2 gesehen der untere Teilfugenflansch 8b horizontal und an seinem Außenende der Teilfugensteg 9 nach unten, so dass an dem unteren Teilfugenflansch 8b ebenfalls eine Längsnut ausgebildet ist.

Die Kupplungsschutzeinrichtung 1 weist ferner eine Haltevorrichtung 10 auf. Die Haltevorrichtung 10 weist ein oberes Halteblech 11 und ein unteres Halteblech 12 auf. In den Fig. 1 und 2 sind die Haltebleche 11, 12 übereinander liegend vertikal angeordnet. Das obere Halteblech 11 weist an seinem unteren Ende eine obere Haltekante 11a auf und das untere Halteblech 12 weist an seinen oberen Ende eine unter Haltekante 12a auf. Das obere Halteblech 11 greift mit seiner oberen Haltekante 11a in die Längsnut des oberen Teilfugenflansches 8a ein und das untere Halteblech 12 greift mit seiner unteren Haltekante 12a in die Längsnut des unteren Teilfugenflansches 8b ein, so dass das obere Halteblech 11 und das untere Halteblech 12 an der Teilfuge tangential zum Wellrohrkörper 2 angeordnet sind. Ferner erstreckt sich sowohl das obere Halteblech 11 als auch das untere Halteblech 12 in der gesamten Längserstreckung der Teilfuge 5.

Die Haltevorrichtung 10 weist drei Halteklammern 13 auf, die jeweils an dem oberen Halteblech 11 und an dem unteren Halteblech 12 befestigt sind. Mittels der Halteklammern 13 sind die beiden Haltebleche 11 und 12 miteinander befestigt, so dass sie in den Längsnuten der Teilfugenflansche 8a und 8b liegend in Position gebracht sind.

Ferner weisen sowohl das obere Halteblech 11 als auch das untere Halteblech 12 paarweise aneinander zugeordnete Augen 15, nämlich vier Paare, auf, durch die jeweils eine Verspannungsschraube 14 gesteckt ist. Durch ein entsprechendes Anziehen der Verspannungsschrauben 14 in ihren Augen 15, werden das obere Halteblech 11 und das untere Halteblech 12 entsprechend mit ihren Haltekanten 11a und 12a in die jeweilige Längsnut der Teilfugenflansche 8a und 8b gedrückt. Dadurch kann die Kraft, mit der die Teilfugenflansche 8a und 8b an der Teilfuge 5 zusammengedrückt werden, dosiert werden.

Da die Haltebleche 11 und 12 an der Teilfuge 5 tangential zu dem Wellrohrkörper 2 angeordnet sind, folgen die Haltebleche 11, 12 der Außenkontur des Wellrohrkörpers 2, insbesondere an der ersten Ausbuchtung 3 und der zweiten Ausbuchtung 4. Dadurch sind sowohl die erste Ausbuchtung 3 und die zweite Ausbuchtung 4 als auch das obere Halteblech 11 und das untere Halteblech 12 im Bereich der ersten Ausbuchtung 3 und der zweiten Ausbuchtung 4 in ähnlicher Art und Weise flexibel in Längsrichtung des Wellrohrkörpers 2 ausgestaltet. Somit ist die Kupplungsschutzeinrichtung 1 selbst im Bereich der Teilfuge 5 flexibel in Längsrichtung, wodurch von der Kupplungsschutzeinrichtung 1 entsprechende Bewegungen in Längsrichtung gut kompensiert werden können.

Ferner sind die Haltebleche 11 und 12 miteinander fluchtend an der Teilfuge 5 übereinander angeordnet. Dadurch bilden die Haltebleche 11 und 12 eine steife Struktur in vertikaler Richtung in Fig. 2 gesehen und eine weiche Struktur in horizontaler Richtung in Fig. 2 gesehen.

Außerdem greifen die Haltebleche 11 und 12 mit ihren Haltekanten 11a und 12a an den Teilfugenflanschen 8a und 8b über die gesamte Längserstreckung der Teilfuge 5 an. Dadurch wird der Wellrohrkörper 3 an der Teilfuge 5 von den Halteblechen 11 und 12 fest zusammengedrückt und aufgrund der hohen Steifigkeit der Haltebleche 11, 12 in vertikaler Richtung in Fig. 2 gesehen mit einer formstabilen Struktur versehen.

Die Kupplungsschutzeinrichtung 1 ist in Längsrichtung des Wellrohrkörpers 2 flexibel und kann somit leicht eine Relativbewegung zwischen den beiden Längsenden der Kupplungsschutzeinrichtung 1 aufnehmen. Ferner kann die Kupplungsschutzeinrichtung 1 leicht an eine Kupplung (nicht gezeigt) montiert werden, da die Kupplungsschutzeinrichtung 1 mit der Teilfuge 5 versehen und somit teilbar ist. Aufgrund der erfindungsgemäßen Ausgestaltung der Haltevorrichtung 10 ist die Kupplungsschutzeinrichtung 1 selbst im Bereich der Teilfuge 5 in Längsrichtung flexibel, wobei die Teilfuge 5 fest zusammengehalten ist.

## Patentansprüche

1. Längsgeteiltes Wellrohr mit einem Wellrohrkörper (2), der eine in Längsrichtung des Wellrohrs verlaufende Teilfuge (5) und mindestens eine quer zur Teilfuge (5) umlaufende Aus- und/oder Einbuchtung (3, 4) aufweist, und einer Haltevorrichtung (10), die den Wellrohrkörper (2) entlang der Teilfuge (5) zusammenhält und an der Aus- und/oder Einbuchtung (3, 4) in Längsrichtung des Wellrohrs flexibel ausgebildet ist.

2. Wellrohr gemäß Anspruch 1, wobei die Haltevorrichtung (10) ein erstes Halteband (11) und ein zweites Halteband (12) aufweist, die jeweils entlang der Teilfuge (5) tangential zum Wellrohrkörper (2) verlaufen und fest miteinander befestigt sind, wobei das erste Halteband (11) an der einen Seite (6) der Teilfuge (5) mit dem Wellrohrkörper (2) in Eingriff steht und das zweite Halteband (12) an der anderen Seite (7) der Teilfuge (5) mit dem Wellrohrkörper (2) in Eingriff steht, so dass von den Haltebändern (11, 12) die Teilfuge (5) zusammen gehalten ist.

3. Wellrohr gemäß Anspruch 2, wobei an der Teilfuge (5) der Wellrohrkörper (2) an der einen Seite (6) der Teilfuge (5) einen ersten Teilfugenflansch (8a) sowie an der anderen Seite (7) der Teilfuge (5) einen zweiten Teilfugenflansch (8b) aufweist und an dem ersten Halteband (11) an dessen der Teilfuge (5) abgewandten Längsseite eine erste Haltekante (11a), die an dem ersten Teilfugenflansch (8a) angreift, sowie an dem zweiten Halteband (12) an dessen der Teilfuge (5) zugewandeten Längsseite eine zweite Haltkante (12a) ausgebildet ist, die an dem zweiten Teilfugenflansch (8b) angreift, so dass von den Haltebändern (11, 12) mit den Haltekanten (11a, 12a) die Teilfuge (5) zusammengehalten ist.

4. Wellrohr gemäß Anspruch 3, wobei an den Teilfugenflanschen (8a, 8b) jeweils ein Teilfugensteg (9) ausgebildet ist, der an dem Wellrohrkörper (2) außenliegend und sich von der Teilfuge (5) weg erstreckend angeordnet ist, so dass das erste Halteband (11) an dem ersten Teilfugenflansch (8a) und das zweite Halteband (12) an dem zweiten Teilfugenflansch (8b) verriegelt ist.

5. Wellrohr gemäß einem der Ansprüche 2 bis 4, wobei die Haltevorrichtung (10) eine Klammer (13) und/oder eine Spannschraubeneinrichtung (14, 15) aufweist, mit der das erste Halteband (11) und das zweite Halteband (12) miteinander fest befestigt sind.

6. Wellrohr gemäß einem der Ansprüche 2 bis 5, wobei die Haltebänder aus Stahlblech gefertigt sind.

7. Wellrohr gemäß einem der Ansprüche 1 bis 6, wobei das Wellrohr als ein Membranbalg oder ein Wellbalg ausgeführt ist.

8. Wellrohr gemäß einem der Ansprüche 1 bis 7, wobei das, Wellrohr aus Verbundwerkstoff, insbesondere faserverstärkt, gefertigt ist.

9. Kupplungsschutzeinrichtung für eine Turbomaschine aufweisend ein längsgeteiltes Wellrohr gemäß einem der Ansprüche 1 bis 8.

## Claims

1. Longitudinally split corrugated pipe having a corrugated pipe body (2) which has a joint (5) running in the longitudinal direction of the corrugated pipe and at least one bulge and/or notch (3, 4) running circumferentially transverse to the joint (5), and having a retaining device (10) which holds the corrugated pipe body (2) together along the joint (5) and is designed flexibly on the bulge and/or notch (3, 4) in the longitudinal direction of the corrugated pipe.

2. Corrugated pipe according to claim 1, the retaining device (10) having a first retaining band (11) and a second retaining band (12) which in each case run along the joint (5) tangentially to the corrugated pipe body (2) and are firmly attached to one another, the first retaining band (11) engaging on the one side (6) of the joint (5) with the corrugated pipe body (2) and the second retaining band (12) engaging on the other side (7) of the joint (5) with the corrugated pipe body (2), so that the joint (5) is held together by the retaining bands (11, 12).

3. Corrugated pipe according to claim 2, the corrugated pipe body (2) having, on the joint (5), a first joint flange (8a) on the one side (6) of the joint (5) and a second joint flange (8b) on the other side (7) of the joint (5), and a first retaining edge (11a) which engages on the first joint flange (8a) being embodied on the longitudinal side of the first retaining band (11) facing away from the joint (5), as well as a second retaining edge (12a) which engages on the second joint flange (8b) being embodied on the longitudinal side of the second retaining band (12) facing the joint (5), so that the joint (5) is held together with the retaining edges (11a, 11b) by the retaining bands (11, 12).

4. Corrugated pipe according to claim 3, a joint web (9) being embodied in each case on the joint flanges (8a, 8b), said joint web (9) being arranged on the outside of the corrugated pipe body (2) and extending away from the joint (5), so that the first retaining band (11) is locked on the first joint flange (8a) and the second retaining band (12) is locked on the second joint flange (8b).

5. Corrugated pipe according to one of claims 2 to 4, the retaining device (10) having a clip (13) and/or a clamping bolt device (14, 15), with which the first retaining band (11) and the second retaining band (12) are firmly attached to each other.

6. Corrugated pipe according to one of claims 2 to 5, the retaining bands being manufactured from sheet steel.

7. Corrugated pipe according to one of claims 1 to 6, the corrugated pipe being designed as a diaphragm bellows or a corrugated bellows.

8. Corrugated pipe according to one of claims 1 to 7, the corrugated pipe being manufactured from composite material, in particular fibre-reinforced.

9. Coupling protection device for a turbo machine having a longitudinally split corrugated pipe according to one of claims 1 to 8.

## Revendications

1. Tube ondulé séparé dans le sens de la longueur, avec un corps de tube ondulé (2) qui présente un joint horizontal (5) dans le sens longitudinal du tube ondulé et au moins une saillie et/ou un creux (3, 4) périphériques transversalement par rapport au joint horizontal (5), et un dispositif de retenue (10) qui maintient le corps de tube ondulé (2) le long du joint horizontal (5) et qui est de réalisation flexible au niveau de la saillie et/ou du creux (3, 4) dans le sens longitudinal du tube ondulé.

2. Tube ondulé selon la revendication 1, le dispositif de retenue (10) présentant une première bande de retenue (11) et une deuxième bande de retenue (12) qui longent chacune le joint horizontal (5) tangentiellement par rapport au corps de tube ondulé (2) et sont fixées solidairement entre elles, la première bande de retenue (11) étant en prise avec le corps de tube ondulé (2) d'un côté (6) du joint horizontal (5) et la deuxième bande de retenue (12) étant en prise avec le corps de tube ondulé (2) de l'autre côté (7) du joint horizontal (5) de sorte que le joint horizontal (5) est maintenu par les bandes de retenue (11, 12).

3. Tube ondulé selon la revendication 2, le corps de tube ondulé (2), au niveau du joint horizontal (5), présentant, d'un côté (6) du joint horizontal (5), une première bride de joint horizontal (8a) et, de l'autre côté (7) du joint horizontal (5), une deuxième bride de joint horizontal (8b), et un premier bord de retenue (11a) qui s'engage dans la première bride de joint horizontal (8a) étant réalisé sur la première bande de retenue (11) sur le coté long de celle-ci opposé au joint horizontal (5) et un deuxième bord de retenue (12a) qui s'engage dans la deuxième bride de joint horizontal (8b) étant réalisé sur la deuxième bande de retenue (12) sur le côté long de celle-ci tourné vers le joint horizontal (5) de sorte que le joint horizontal (5) est maintenu par les bandes de retenue (11, 12) avec les bords de retenue (11a, 12a).

4. Tube ondulé selon la revendication 3, respectivement un rebord de joint horizontal (9) étant réalisé sur les brides de joint horizontal (8a, 8b), lequel se trouve à l'extérieur sur le corps de tube ondulé (2) et est disposé de manière à aller s'éloignant du joint horizontal (5) de sorte que la première bande de retenue (11) est bloquée sur la première bride de joint horizontal (8a) et la deuxième bande de retenue (12) est bloquée sur la deuxième bride de joint horizontal (8b).

5. Tube ondulé selon l'une des revendications 2 à 4, le dispositif de retenue (10) présentant une pince (13) et/ou un dispositif de vissage-serrage (14, 15) au moyen desquels la première bande de retenue (11) et la deuxième bande de retenue (12) sont fixées solidairement entre elles.

6. Tube ondulé selon l'une des revendications 2 à 5, les bandes de retenue étant fabriquées en tôle d'acier.

7. Tube ondulé selon l'une des revendications 1 à 6, le tube ondulé se présentant sous la forme d'un soufflet à membrane ou d'un soufflet ondulé.

8. Tube ondulé selon l'une des revendications 1 à 7, le tube ondulé étant fabriqué en matériau composite, en particulier renforcé par des fibres.

9. Dispositif de protection d'embrayage pour une turbomachine, comportant un tube ondulé séparé dans le sens de la longueur selon l'une des revendications 1 à 8.
